# EUROPEAN PATENT APPLICATION

(11) **EP 4 481 712 A1**
(43) Date of publication of application: **25.12.2024**
(21) Application number: 24179018.7
(22) Date of filing: 30.05.2024
(51) Int. Cl.: G08G 5/00, G01C 23/00

(54) **SYSTEMS AND METHODS FOR MANAGING COMMUNICATIONS BETWEEN PAIRED AIRCRAFT**

(30) Priority: 23.06.2023 IN 202311042132; 07.08.2023 US 202318366021
(71) Applicant: Honeywell International Inc., Charlotte, NC 28202 (US)
(72) Inventor: SUBRAMANIYAN, Muthusankar, Charlotte, 28202 (US); PARICAUD, Erwan, Charlotte, 28202 (US); KANAGARAJAN, Sivakumar, Charlotte, 28202 (US)
(74) Representative: LKGlobal UK Ltd.

(57) **Abstract**

A wake energy formation flight plan is received from a formation flight coordination ground station at a first aircraft. The wake energy formation flight plan includes an aircraft identifier of a second aircraft and a formation flight path. The formation flight path is along a portion of a first flight path of the first aircraft that overlaps with a portion of a second flight path of the second aircraft. A paired communication channel is established between the first FMS of the first aircraft and a second FMS of the second aircraft while the first and second aircraft are flying in formation along at least a portion of the first formation flight path to enable transmission of first FMS data generated by the first FMS to the second FMS and receipt of second FMS data generated by the second FMS at the first FMS.

## Description

### CROSS-REFERENCE TO RELATED APPLICATION

This application claims priority to India Provisional Patent Application No. 202311042132, filed June 23, 2023, the entire content of which is incorporated by reference herein.

### TECHNICAL FIELD

The present invention generally relates to aircraft operations and more particularly relates to systems and methods for managing communications between one or more paired aircraft.

### BACKGROUND

An increasing number of aircraft, including commercial aircraft, are engaging in formation flying to reap the benefits of wake fuel burn. In many cases, flying in formation may reduce aircraft fuel consumption by as much as 10%. The separation distance between a leading aircraft and a following aircraft may be as low as 1000 to 1500 feet altitude separation and as close as 1.5 nautical miles to 2 nautical miles in lateral separation for effective wake surf. The separation distance is typically far enough to avoid turbulence but close enough to gain wake surfing benefits.

When a leading aircraft and a following aircraft fly in close proximity with low separation distances, changes in aircraft parameters can result in changes in safe separation distances. Examples of aircraft parameters include, but are not limited to, aircraft speed, aircraft altitude, and aircraft position. Providing each aircraft with access to the aircraft parameters of the other aircraft may improve aircraft safety. Increased data sharing at greater frequencies may improve separation distance monitoring.

Hence there is a need for systems and methods for managing communications between paired aircraft.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various embodiments, a system includes a first flight management system (FMS) system of a first aircraft and a controller communicatively coupled to the first FMS. The controller is configured to: receive, from a formation flight coordination ground station, a first wake energy formation flight plan comprising a first aircraft identifier of a second aircraft and a first formation flight path, wherein the first formation flight path is along a portion of a first flight path of the first aircraft that overlaps with a portion of a second flight path of the second aircraft and one of the first and second aircraft is a leading aircraft and the other one of the first and second aircraft is a following aircraft; and establish a paired communication channel between the first FMS of the first aircraft and a second FMS of the second aircraft while the first and second aircraft are flying in formation along at least a portion of the first formation flight path to enable transmission of first FMS data generated by the first FMS to the second FMS and receipt of second FMS data generated by the second FMS at the first FMS.

In various embodiments, a method includes receiving from a formation flight coordination ground station at a first aircraft, a first wake energy formation flight plan comprising a first aircraft identifier of a second aircraft and a first formation flight path, wherein the first formation flight path is along a portion of a first flight path of the first aircraft that overlaps with a portion of a second flight path of the second aircraft and one of the first and second aircraft is a leading aircraft and the other one of the first and second aircraft is a following aircraft; and establishing, by the first aircraft, a paired communication channel between a first flight management system (FMS) of the first aircraft and a second FMS of the second aircraft while the first and second aircraft are flying in formation along at least a portion of the first formation flight path to enable transmission of first FMS data generated by the first FMS to the second FMS and receipt of second FMS data generated by the second FMS at the first FMS.

Furthermore, other desirable features and characteristics of the system and method for generating a modified flight path to avoid a no turn situation will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram representation of a system configured to implement paired aircraft communication management in accordance with least one embodiment;
FIG. 2 is a diagrammatic representation of a leading aircraft and a following aircraft exchanging flight management system (FMS) data via a paired communication channel between the FMS of the leading aircraft and the FMS of the following aircraft in accordance with at least one embodiment;
FIG. 3 is block diagram representation of an aircraft including a paired aircraft communication management system in accordance with at least one embodiment;
FIG. 4 is a diagrammatic representation of an exemplary implementation of paired aircraft communication management system in accordance with at least one embodiment; and
FIG. 5 is a flowchart representation of a method of managing paired aircraft communications in accordance with at least one embodiment; and
FIG. 6 is a diagrammatic representation of an exemplary rendezvous flight pairing display for display at a following aircraft in accordance with at least one embodiment.

### DETAILED DESCRIPTION

The following detailed description is merely exemplary in nature. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

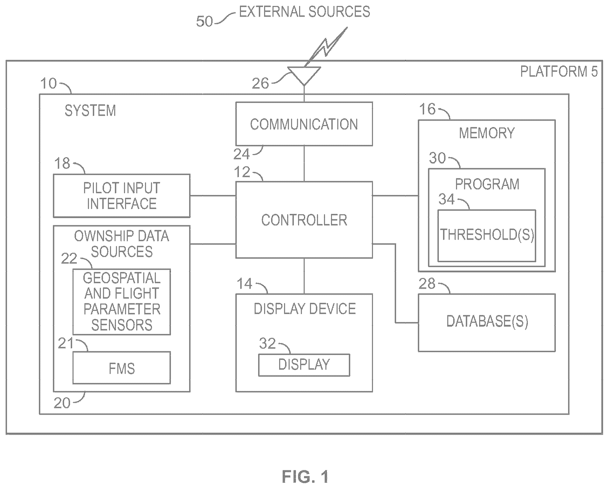

FIG. 1 is a block diagram representation of a system 10 configured to implement management of paired aircraft communications in accordance with an embodiment (shortened herein to "system" 10), as illustrated in accordance with an exemplary and non-limiting embodiment of the present disclosure. The system 10 may be utilized onboard a mobile platform 5, as described herein. In various embodiments, the mobile platform is an aircraft, which carries or is equipped with the system 10. As schematically depicted in FIG. 1, the system 10 includes the following components or subsystems, each of which may assume the form of a single device or multiple interconnected devices: a controller circuit 12 operationally coupled to: at least one display device 14; computer-readable storage media or memory 16; an optional input interface 18, and ownship data sources 20 including, for example, a flight management system (FMS) 21 and an array of flight system state and geospatial sensors 22.

In various embodiments, the system 10 may be separate from or integrated within: the flight management system (FMS) 21 and/or a flight control system (FCS). Although schematically illustrated in FIG. 1 as a single unit, the individual elements and components of the system 10 can be implemented in a distributed manner utilizing any practical number of physically distinct and operatively interconnected pieces of hardware or equipment. When the system 10 is utilized as described herein, the various components of the system 10 will typically all be located onboard the mobile platform 5.

The term "controller circuit" (and its simplification, "controller"), broadly encompasses those components utilized to carry-out or otherwise support the processing functionalities of the system 10. Accordingly, the controller circuit 12 can encompass or may be associated with a programmable logic array, application specific integrated circuit or other similar firmware, as well as any number of individual processors, flight control computers, navigational equipment pieces, computer-readable memories (including or in addition to the memory 16), power supplies, storage devices, interface cards, and other standardized components. In various embodiments, the controller circuit 12 embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit 12 may be programmed with and execute the at least one firmware or software program, for example, a program 30, that embodies an algorithm described herein for generating a modified flight path to avoid a no turn situation in accordance with an embodiment on a mobile platform 5, where the mobile platform 5 is an aircraft, and to accordingly perform the various process steps, tasks, calculations, and control/display functions described herein.

The controller circuit 12 may exchange data, including real-time wireless data, with one or more external sources 50 to support operation of the system 10 in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

The memory 16 is a data storage that can encompass any number and type of storage media suitable for storing computer-readable code or instructions, such as the aforementioned software program 30, as well as other data generally supporting the operation of the system 10. The memory 16 may also store one or more threshold 34 values, for use by an algorithm embodied in software program 30. One or more database(s) 28 are another form of storage media; they may be integrated with memory 16 or separate from it.

In various embodiments, aircraft-specific parameters and information for an aircraft may be stored in the memory 16 or in a database 28 and referenced by the program 30. Non-limiting examples of aircraft-specific information includes an aircraft weight and dimensions, performance capabilities, configuration options, and the like.

Flight parameter sensors and geospatial sensors 22 supply various types of data or measurements to the controller circuit 12 during an aircraft flight. In various embodiments, the geospatial sensors 22 supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, the display device 14 can include any number and type of image generating devices on which one or more avionic displays 32 may be produced. When the system 10 is utilized for a manned aircraft, the display device 14 may be affixed to the static structure of the Aircraft cockpit as, for example, a Head Down Display (HDD) or Head Up Display (HUD) unit. In various embodiments, the display device 14 may assume the form of a movable display device (e.g., a pilot-worn display device) or a portable display device, such as an Electronic Flight Bag (EFB), a laptop, or a tablet computer carried into the aircraft cockpit by a pilot.

At least one avionic display 32 is generated on the display device 14 during operation of the system 10; the term "avionic display" is synonymous with the term "aircraft-related display" and "cockpit display" and encompasses displays generated in textual, graphical, cartographical, and other formats. The system 10 can generate various types of lateral and vertical avionic displays 32 on which map views and symbology, text annunciations, and other graphics pertaining to flight planning are presented for a pilot to view. The display device 14 is configured to continuously render at least a lateral display showing the aircraft at its current location within the map data. The avionic display 32 generated and controlled by the system 10 can include graphical user interface (GUI) objects and alphanumerical input displays of the type commonly presented on the screens of multifunction control display units (MCDUs), as well as Control Display Units (CDUs) generally. Specifically, embodiments of the avionic displays 32 include one or more two-dimensional (2D) avionic displays, such as a horizontal (i.e., lateral) navigation display or vertical navigation display (i.e., vertical situation display VSD); and/or on one or more three dimensional (3D) avionic displays, such as a Primary Flight Display (PFD) or an exocentric 3D avionic display.

In various embodiments, a human-machine interface is implemented as an integration of a pilot input interface 18 and a display device 14. In various embodiments, the display device 14 is a touch screen display. In various embodiments, the human-machine interface also includes a separate pilot input interface 18 (such as a keyboard, cursor control device, voice input device, or the like), generally operationally coupled to the display device 14. Via various display and graphics systems processes, the controller circuit 12 may command and control a touch screen display device 14 to generate a variety of graphical user interface (GUI) objects or elements described herein, including, for example, buttons, sliders, and the like, which are used to prompt a user to interact with the human-machine interface to provide user input; and for the controller circuit 12 to activate respective functions and provide user feedback, responsive to received user input at the GUI element.

In various embodiments, the system 10 may also include a dedicated communications circuit 24 configured to provide a real-time bidirectional wired and/or wireless data exchange for the controller 12 to communicate with the external sources 50 (including, each of: traffic, air traffic control (ATC), satellite weather sources, ground stations, and the like). In various embodiments, the communications circuit 24 may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit 24 is integrated within the controller circuit 12, and in other embodiments, the communications circuit 24 is external to the controller circuit 12. When the external source 50 is "traffic," the communications circuit 24 may incorporate software and/or hardware for communication protocols as needed for traffic collision avoidance (TCAS), automatic dependent surveillance broadcast (ADSB), and enhanced vision systems (EVS).

In certain embodiments of the system 10, the controller circuit 12 and the other components of the system 10 may be integrated within or cooperate with any number and type of systems commonly deployed onboard an aircraft including, for example, an FMS 21.

The disclosed algorithm is embodied in a hardware program or software program (e.g. program 30 in controller circuit 12) and configured to operate when the aircraft is in any phase of flight. The algorithm enables management of communications between paired aircraft.

In various embodiments, the provided controller circuit 12, and therefore its program 30 may incorporate the programming instructions for: receiving from a formation flight coordination ground station at a first aircraft, a first wake energy formation flight plan comprising a first aircraft identifier of a second aircraft and a first formation flight path, wherein the first formation flight path is along a portion of a first flight path of the first aircraft that overlaps with a portion of a second flight path of the second aircraft and one of the first and second aircraft is a leading aircraft and the other one of the first and second aircraft is a following aircraft; and establishing, by the first aircraft, a paired communication channel between a first flight management system (FMS) of the first aircraft and a second FMS of the second aircraft while the first and second aircraft are flying in formation along at least a portion of the first formation flight path to enable transmission of first FMS data generated by the first FMS to the second FMS and receipt of second FMS data generated by the second FMS at the first FMS.

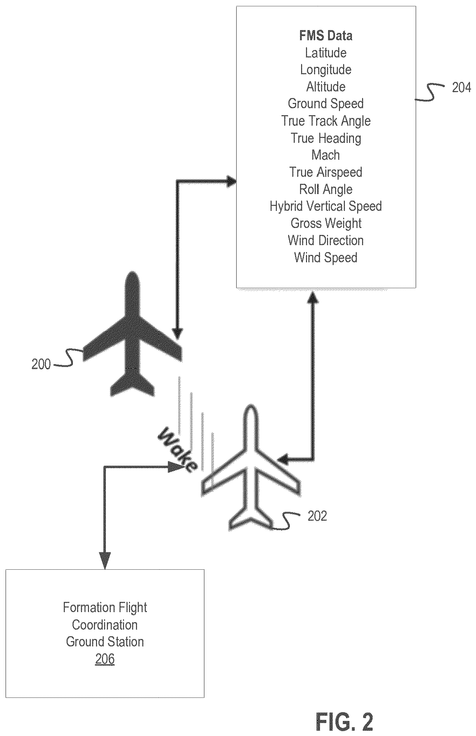

Referring to FIG. 2, a diagrammatic representation of a leading aircraft 200 and a following aircraft 202 exchanging flight management system (FMS) data 204 via a paired communication channel between the FMS of the leading aircraft and the FMS of the following aircraft in accordance with at least one embodiment is shown. The following aircraft 202 is configured to be communicatively coupled to a formation flight coordination ground station 206. The leading aircraft 200 and the following aircraft 202 are flying in accordance with a wake energy formation flight plan received by the following aircraft 202 from the formation flight coordination ground station 206. Examples of formation flight coordination ground stations 206 include, but are not limited to, air traffic control (ATC) and a dispatch team station.

The wake energy formation flight plan includes an aircraft identifier of the leading aircraft 200 and a formation flight path associated with the leading aircraft 200. The leading aircraft 200 has a leading aircraft flight path and the following aircraft 202 has a following aircraft flight path. The formation flight path is along a portion of the leading aircraft flight path that overlaps a portion of the following aircraft flight path.

The leading aircraft 200 and the following aircraft 202, each include a paired aircraft communication management system. The paired aircraft communication management system of the following aircraft 202 receives the wake energy formation flight plan from the formation flight coordination ground station 206. The paired aircraft communication management system of the following aircraft 202 coordinates the establishing of a paired communication channel between an FMS of the following aircraft 202 and an FMS of the leading aircraft 200. The paired communication channel is initiated and maintained through at least a portion of the flight formation flight path. The FMS of the leading aircraft 200 transmits the FMS data 204 of the leading aircraft 200 to the FMS of the following aircraft 202 via the paired communication channel and the FMS of the following aircraft 202 transmits FMS data 204 to the FMS of the leading aircraft 200 via the paired communication channel. The minimum distance for obtaining the benefits of a formation flight may be around 1000 nautical miles to 2000 nautical miles.

Examples of FMS data 204 shared between the FMS of the leading aircraft 200 and the FMS of the following aircraft 202 include, but are not limited to, of a latitude location of the aircraft, a longitude location of the aircraft, an altitude of the aircraft, a ground speed of the aircraft, a true track angle of the aircraft, a true heading of the aircraft, a Mach number associated with a speed of the aircraft, a true airspeed (TAS) of the aircraft, a roll angle of the aircraft, a hybrid vertical speed of the aircraft, a gross weight of the aircraft, a wind direction detected by the aircraft, and a wind speed detected by the aircraft. While a single following aircraft 202 is shown as flying in formation with the leading aircraft 200 in FIG. 2, there may be two or more following aircraft flying in formation with the leading aircraft 200 with the FMS of each of the two following aircraft exchanging FMS data 204 with the FMS of the leading aircraft 200.

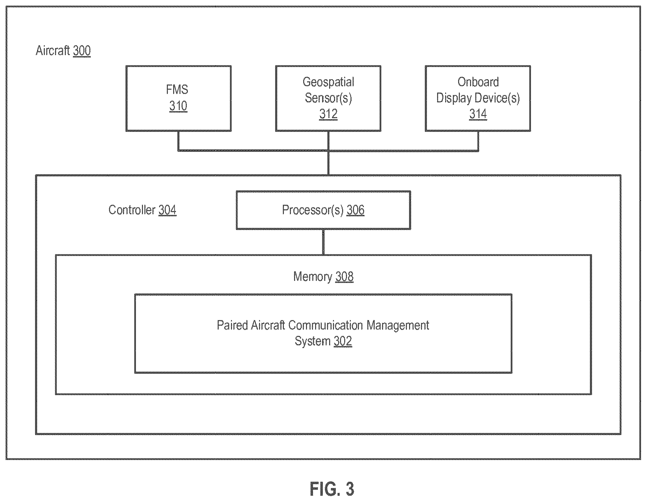

Referring to FIG. 3, a block diagram representation of an aircraft 300 including a paired aircraft communication management system 302 in accordance with at least one embodiment is shown. The aircraft 300 is representative of the leading aircraft 200 and the following aircraft 202. In various embodiments, the configuration of the aircraft 300 is similar to the configuration of platform 5 described with reference to FIG. 1. The aircraft 300 includes at least one controller 304. The controller 304 includes at least one processor 306 and at least one memory 308. The memory 308 includes the paired aircraft communication management system 302. In various embodiments, the controller 304 may include additional components that facilitate operation of the controller 304.

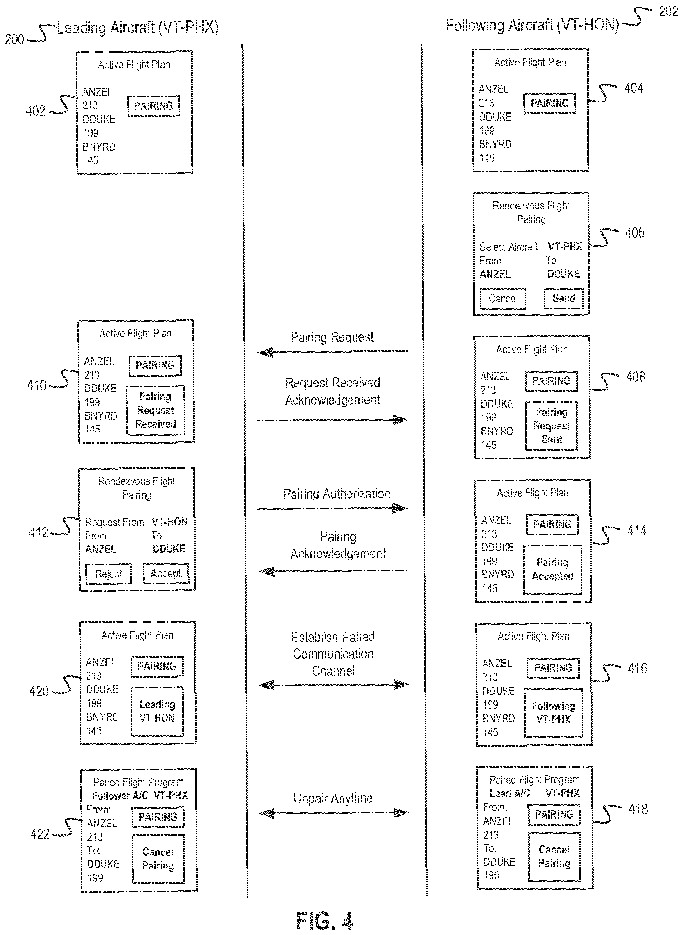

The controller 304 is configured to be communicatively coupled to an FMS 310, one or more geospatial sensors 312 and one or more onboard display devices 314. The FMS 310 is similar to the FMS 21 in FIG. 1. The one or more geospatial sensors 312 are similar to the geospatial sensors 22 in FIG. 1. The one or more onboard display devices 314 are similar to the onboard devices 14 in FIG. 1. In various embodiments, the onboard display device(s) 314 is a multi-function cockpit display unit (MCDU). The operation of the paired aircraft communication management system 302 will be described in further detail below with reference to FIG. 4.

Referring to FIG. 4, a diagrammatic representation of an exemplary implementation of a paired aircraft communication management system 302 in accordance with at least one embodiment is shown. When an aircraft 200, 202 is available to fly in formation in accordance with a wake energy formation flight plan as either a leading aircraft 200 or as a following aircraft 202, the paired aircraft communication management system 302 is configured to place that aircraft 200, 202 in pairing mode.

The paired aircraft communication management system 302 of the aircraft 200 has determined that the aircraft 200 is available for pairing and placed the aircraft 200 in pairing mode. Upon placing the aircraft 200 in pairing mode, the paired aircraft communication management system 302 of the aircraft 200 is configured to generate an active flight plan display 402 for display on an onboard display device 314 of the aircraft 200. The active flight plan display 402 includes a flight path of the aircraft 200 and a pairing mode indicator. The flight path of the aircraft 200 includes, for example from FIG. 4, the waypoints ANZEL, DDUKE, and BNYRD. The pairing mode indicator is shown as "PAIRING" indicating that the aircraft 200 has been placed in pairing mode.

The paired aircraft communication management system 302 of the aircraft 202 has determined that the aircraft 202 is available for pairing and placed the aircraft 202 in pairing mode. Upon placing the aircraft 202 in pairing mode, the paired aircraft communication management system 302 of the aircraft 202 is configured to generate an active flight plan display 404 for display on an onboard display device 314 of the aircraft 202. The active flight plan display 404 includes a flight path of the aircraft 202 and a pairing mode indicator. The flight path of the aircraft 202 includes the waypoints ANZEL, DDUKE, and BNYRD. The pairing mode indicator is shown as "PAIRING" indicating that the aircraft 202 has been placed in pairing mode.

The paired aircraft communication management system 302 of the aircraft 202 has received a plurality of wake energy formation flight plans from the formation flight coordination ground station 206 that will enable the aircraft 202 to fly in formation as a following aircraft 202. Each of the plurality of wake energy formation flight plans is associated with an aircraft 200 that is available to fly in formation as a leading aircraft. Each wake energy formation flight plan includes an aircraft identifier of the aircraft that is available to fly in formation as a leading aircraft and a formation flight path associated with that aircraft. The formation flight path is along a portion of the flight path of that aircraft as and along a portion of the flight path of the following aircraft 202.

The paired aircraft communication management system 302 of the following aircraft 202 is configured to generate a rendezvous flight pairing display 406 for display on an onboard display device 314 of the following aircraft 202 in response to receipt of the plurality of wake energy formation flight plans from the formation flight coordination ground station 206. In various embodiments, the rendezvous flight pairing display 406 includes a "select aircraft" drop-down menu that includes the aircraft identifiers of each of the aircraft associated with each of the plurality of wake energy formation flight plans.

The paired aircraft communication management system 302 of the following aircraft 202 is configured to receive a selection of a leading aircraft 200 to fly in formation with the following aircraft 202 from, for example a crew member, via the drop-down menu. The paired aircraft communication management system 302 of the following aircraft 202 is configured to receive the selection of the leading aircraft 200 via an onboard input interface. Upon the receipt of a selection of a leading aircraft 202, the paired aircraft communication management system 302 of the following aircraft 202 is configured to display the aircraft identifier VT-PHX of the selected leading aircraft 202 on the rendezvous flight pairing display 406. V-PHX is an example of an aircraft identifier. In this example, VT-PHX is the aircraft identifier of the leading aircraft 202.

In various embodiments, the rendezvous flight pairing display 406 includes a start location selector "FROM" and an end location selector "TO". The paired aircraft communication management system 302 of the following aircraft 202 is configured to receive a start location that specifies the location at which the following aircraft 202 intends to begin flying in formation with the leading aircraft 200 and an end location that specifies the location at which the following aircraft 202 intends to terminate flying in formation with the leading aircraft 202 via the rendezvous flight pairing display 406. The paired aircraft communication management system 302 of the following aircraft 202 is configured to receive the start location and the end location via an onboard input interface. In various embodiments, the start location selector "TO" is a drop-down menu that includes selectable waypoints ANZEL, DDUKE, BNYRD disposed along the formation flight path associated with the leading aircraft 202 and the end location selector "FROM" is a drop-down menu that includes selectable waypoints ANZEL, DDUKE, BNYRD disposed along the formation flight path associated with the leading aircraft 202.

A crew member of the following aircraft 202 may decide to fly in formation with the leading aircraft 200 along the entire formation flight path or along a portion of the formation flight path. The crew member selects the start location and the end location of the portion of the formation flight path via the drop-down menus on the rendezvous flight pairing display 406. For example, the waypoints ANZEL, DDUKE, and BNYRD are disposed along the entire formation flight path associated with the leading aircraft 200. The rendezvous flight pairing display 406 of the following aircraft 202 indicates that the paired aircraft communication management system 302 of the following aircraft 202 received a selection of a starting location at the waypoint ANZEL and an ending location at the waypoint DDUKE via the drop-down menus on the rendezvous flight pairing display 406. In this example, the crew member of the following aircraft 202 has decided to fly in formation with the leading aircraft 200 along a portion of the formation flight path from the waypoint ANZEL to the waypoint DDUKE.

The rendezvous flight pairing display 406 includes a SEND prompt and a CANCEL prompt. The crew member may decide to cancel the pairing request to fly in formation with the leading aircraft 200 by activating the CANCEL prompt or send a pairing request to the leading aircraft 200 by activating the SEND prompt. Responsive to detection of an activation of the SEND prompt on the rendezvous flight pairing display 406, the paired aircraft communication management system 302 of the following aircraft 202 is configured to transmit a pairing request to the leading aircraft 200.

In various embodiments, the pairing request includes the aircraft identifier VT-HON of the following aircraft 202, a request to fly in formation with the leading aircraft 200 as a following aircraft 202 from the start location ANZEL to the end location DDUKE, and a request to initiate a paired communication channel between the FMS 310 of the following aircraft 202 and the FMS 310 of the leading aircraft 200. In various embodiments, responsive to detection of an activation of the SEND prompt on the rendezvous flight pairing display 406, the paired aircraft communication management system 302 of the following aircraft 202 is configured to update the active flight plan display 408 to indicate that a pairing request has been sent to the leading aircraft 200. Responsive to receipt of the pairing request from the following aircraft 202, the paired aircraft communication management system 302 of the leading aircraft 200 is configured to update the active flight plan display 408 to indicate that the pairing request has been received and transmit a request received acknowledgement indicating that the pairing request has been received. In various embodiments, a single leading aircraft 200 may fly in formation with multiple following aircraft 202.

Responsive to receipt of the pairing request from the following aircraft 202, the paired aircraft communication management system 302 of the leading aircraft 202 is configured to generate a rendezvous flight pairing display 412 for display on an onboard display device 314 of the leading aircraft 200. In various embodiments, the rendezvous flight pairing display 412 includes the aircraft identifier VT-HON of the following aircraft 202, the start location ANZEL, and the end location DDUKE received in the pairing request. The rendezvous flight pairing display 412 includes a REJECT prompt and an ACCEPT prompt.

The crew member of the leading aircraft 200 may decide to reject the pairing request from the following aircraft 202 by activating the REJECT prompt or accept the pairing request by activating the ACCEPT prompt. The paired aircraft communication management system 302 of the leading aircraft 200 is configured to transmit a rejection of the pairing request to the following aircraft 202 responsive to detection of activation of the REJECT prompt and to transmit a pairing authorization to the following aircraft 202 responsive to detection of activation of the ACCEPT prompt. The paired aircraft communication management system 302 of the leading aircraft 200 is configured to enable establishing a paired communication channel between the FMS 310 of the leading aircraft 200 with the FMS 310 of the following aircraft 202 responsive to the detection of the activation of the ACCEPT prompt.

Responsive to receipt of the pairing authorization from the leading aircraft 200, the paired aircraft communication management system 302 of the following aircraft 202 is configured to update the active flight plan display 414 to indicated that the pairing request has been accepted by the leading aircraft 200 and to transmit a pairing acknowledgement to the leading aircraft 200. The following aircraft 202 prepares to fly in formation with the leading aircraft 200 along the portion of the formation flight path defined by the start location and the end location. In various embodiments, if there are two or more following aircraft flying in formation with the leading aircraft 200, each of the following aircraft are notified of new pairings established between a new following aircraft and the leading aircraft 200.

The paired aircraft communication management system 302 of the following aircraft 202 is configured to establish a paired communication channel between the FMS 310 of the following aircraft 200 and the FMS 310 of the leading aircraft 200 upon a determination by the paired aircraft communication management system 302 of the following aircraft 202 that the following aircraft 202 has arrived at the start location. The paired aircraft communication management system 302 of the following aircraft 202 is configured to determine that the following aircraft 202 has arrived at the start location based on aircraft location data received from the geospatial sensor(s) 312 of the following aircraft 202.

Once the paired communication channel between the FMS 310 of the following aircraft 202 and the FMS 310 of the leading aircraft 200 has been established, the FMS 310 of the following aircraft 202 transmits FMS data generated by the FMS 310 of the following aircraft 202 to the FMS 310 of the leading aircraft 200 and the FMS 310 of the leading aircraft 200 transmits FMS data generated by the FMS 310 of the leading aircraft 200 to the FMS 310 of the following aircraft 202. Examples of FMS data includes, but are not limited to, a latitude location of the aircraft, a longitude location of the aircraft, an altitude of the aircraft, a ground speed of the aircraft, a true track angle of the aircraft, a true heading of the aircraft, a Mach number associated with a speed of the aircraft, a true airspeed (TAS) of the aircraft, a roll angle of the aircraft, a hybrid vertical speed of the aircraft, a gross weight of the aircraft, a wind direction detected by the aircraft, and a wind speed detected by the aircraft.

The paired aircraft communication management system 302 of the following aircraft 202 is configured to update the active flight plan display 416 with the aircraft identifier VT-PHX of the leading aircraft 200 indicating that the following aircraft 202 is following the leading aircraft 200. The paired aircraft communication management system 302 of the following aircraft 202 is configured to generate a paired flight program display 418. The paired flight program display 418 includes the aircraft identifier VT-PHX of the lead aircraft 202, the start location ANZEL, and the end location DDUKE.

By default, the paired communication channel between the FMS 310 of the following aircraft 200 and the FMS 310 of the leading aircraft 200 is maintained from the start location ANZEL until the arrival of the following aircraft 202 and the leading aircraft 200 at the end location DDUKE. The paired flight program display 418 includes a Cancel Pairing prompt. A crew member of the following aircraft 202 can activate the Cancel Pairing prompt to initiate unpai
ing of the following aircraft 202 from the leading aircraft 200 prior to the arrival of the following aircraft 200 at the end location. In various embodiments, upon activation of the Cancel Pairing, the following aircraft 200 breaks away from the formation with respect to the leading aircraft 200 and the paired aircraft communication management system 302 of the following aircraft 202 terminates the paired communication channel between the FMS 310 of the following aircraft 200 and the FMS 310 of the leading aircraft 200. In various embodiments, upon activation of the Cancel Pairing, the following aircraft 202 remains in formation with respect to the leading aircraft 200 but the paired aircraft communication management system 302 of the following aircraft 202 terminates the paired communication channel between the FMS 310 of the following aircraft 202 and the FMS 310 of the leading aircraft 200. In a various embodiments, when a following aircraft 202 unpairs from the leading aircraft 200, all of the other following aircraft flying in formation with the leading aircraft 200 are notified of the unpairing by the aircraft.

The paired aircraft communication management system 302 of the leading aircraft 200 is configured to update the active flight plan display 420 with the aircraft identifier VT-HON of the following aircraft 202 to indicate that the leading aircraft 200 is leading the following aircraft 202. The paired aircraft communication management system 302 of the leading aircraft 200 is configured to generate a paired flight program display 422. The paired flight program display 422 includes the aircraft identifier VT-HON of the following aircraft 202, the start location ANZEL, and the end location DDUKE.

The paired flight program display 422 includes a Cancel Pairing prompt. A crew member of the leading aircraft 200 can activate the Cancel Pairing prompt to initiate unpairing of the leading aircraft 200 from the following aircraft 202 prior to the arrival of the leading aircraft 200 at the end location DDUKE. In various embodiments, upon activation of the Cancel Pairing, the leading aircraft 200 breaks away from the formation with respect to the following aircraft 202 and the paired aircraft communication management system 302 of the leading aircraft 200 terminates the paired communication channel between the FMS 310 of the leading aircraft 200 and the FMS 310 of the following aircraft 202. In various embodiments, upon activation of the Cancel Pairing, the leading aircraft 200 remains in formation with respect to the following aircraft 202 but the paired aircraft communication management system 302 of the leading aircraft 200 terminates the paired communication channel between the FMS 310 of the leading aircraft 200 and the FMS 310 of the following aircraft 202.

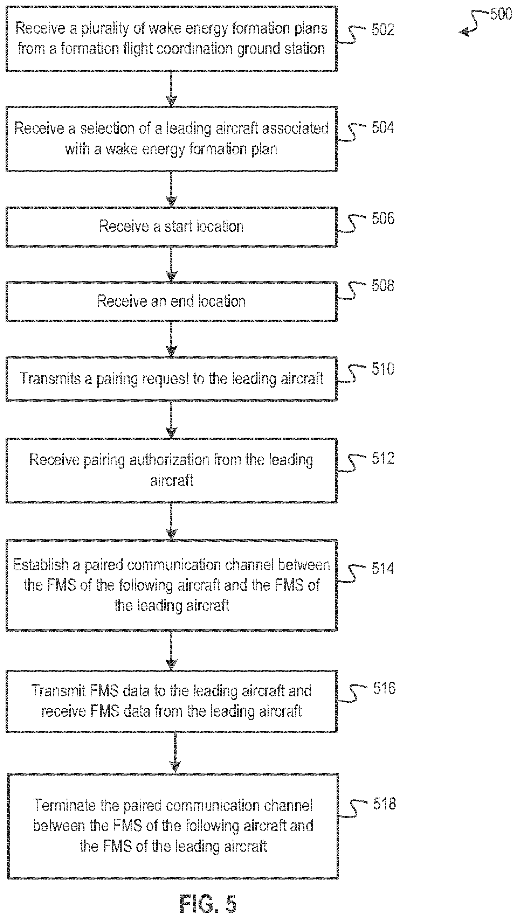

Referring to FIG. 5, a flowchart representation of a method 500 of managing paired aircraft communications in accordance with at least one embodiment is shown. The method 500 will be described with reference to an exemplary implementation of the paired aircraft communication management system 302 at a following aircraft 202. As can be appreciated in light of the disclosure, the order of operation within the method 500 is not limited to the sequential execution as illustrated in FIG. 5 but may be performed in one or more varying orders as applicable and in accordance with the present disclosure.

At 502, the paired aircraft communication management system 302 of a following aircraft 202 receives a plurality of wake energy formation plans from a formation flight coordination ground station 206. Examples of formation flight coordination ground stations 206 include, but are not limited to, air traffic control (ATC) station and a dispatcher team station. Each wake energy formation plan is associated with an available leading aircraft. Each wake energy formation plan includes an aircraft identifier of an available leading aircraft and a formation flight path. The formation flight path is along a portion of a flight path of the available leading aircraft that overlaps a flight path of the following aircraft 202.

At 504, the paired aircraft communication management system 302 of the following aircraft 202 receives a selection of a leading aircraft associated with one of the received wake energy formations plan via an onboard input interface. At 506, the paired aircraft communication management system 302 of the following aircraft 202 receives a selection of a start location along the formation flight path via an onboard input interface. In various embodiments, the selected start location is one of the waypoints disposed along the formation flight path. The start location is the location at which a crew member of the following aircraft 202 would like to start flying in formation with the selected leading aircraft 200.

At 508, the paired aircraft communication management system 302 of the following aircraft 202 receives a selection of an end location along the formation flight path via an onboard input interface. In various embodiments, the selected end location is one of the waypoints disposed along the formation flight path. The end location is the location at which a crew member of the following aircraft 202 would like to terminate the formation flight with the selected leading aircraft 200.

At 510, the paired aircraft communication management system 302 of the following aircraft 202 transmits a pairing request to the paired aircraft communication management system 302 of the selected leading aircraft 202. The pairing request includes the aircraft identifier of the following aircraft 202, a request to fly in formation with the selected leading aircraft 200 from the selected start location to the selected end location, and a request to initiate a paired communication channel between the FMS 310 of the following aircraft 202 and the FMS 310 of the selected leading aircraft 200.

At 512, the paired aircraft communication management system 302 of the following aircraft 202 receives pairing authorization from the selected leading aircraft 200. The pairing authorization indicates that a crew member of the selected leading aircraft 200 has agreed to fly the selected leading aircraft 200 in formation with the following aircraft 202. The pairing authorization provides authorization to the paired aircraft communication management system 302 of the following aircraft 202 to establish a paired communication channel between the FMS 310 of the following aircraft 200 and the FMS 310 of the leading aircraft 202.

At 514, the paired aircraft communication management system 302 of the following aircraft 202 establishes a paired communication channel between the FMS 310 of the following aircraft 200 and the FMS 310 of the leading aircraft 202. The paired communication channel between the FMS 310 of the following aircraft 200 and the FMS 310 of the leading aircraft 202 is by default maintained from the start location to the end location. The paired aircraft communication management system 302 provides an option for a crew member of the following aircraft 202 or the leading aircraft 200 to terminate the paired communication channel at any time.

At 516, the FMS 310 of the following aircraft 202 transmits FMS data to the FMS 310 of the leading aircraft and receives FMS data from the FMS 310 of the leading aircraft 200. Examples of FMS data includes, but are not limited to, a latitude location of the aircraft, a longitude location of the aircraft, an altitude of the aircraft, a ground speed of the aircraft, a true track angle of the aircraft, a true heading of the aircraft, a Mach number associated with a speed of the aircraft, a true airspeed (TAS) of the aircraft, a roll angle of the aircraft, a hybrid vertical speed of the aircraft, a gross weight of the aircraft, a wind direction detected by the aircraft, and a wind speed detected by the aircraft.

At 518, the paired aircraft communication management system 302 of the following aircraft 202 terminates the paired communication channel between the FMS 310 of the following aircraft 200 and the FMS 310 of the leading aircraft 202 upon reaching the end location. In various embodiments, examples of paired communication channels include datalink communication channels, transponder-based communication channels, and traffic collision avoidance system (TCAS) based communication channels.

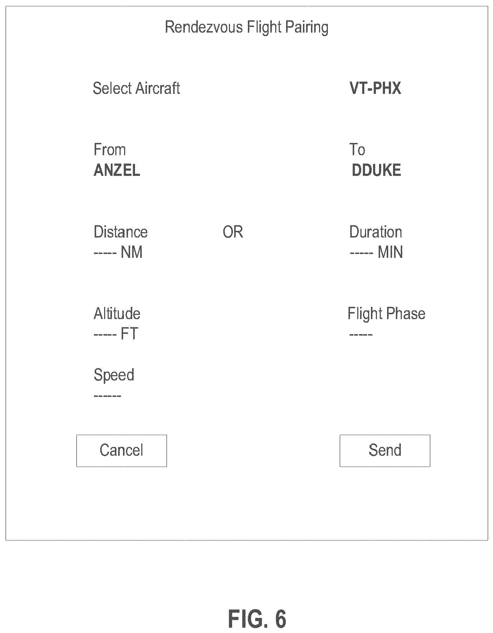

Referring to FIG. 6, a diagrammatic representation of an exemplary rendezvous flight pairing display 600 for display at a following aircraft 202 in accordance with at least one embodiment is shown. The rendezvous flight pairing display 600 includes a "select aircraft" drop-down menu that includes the aircraft identifiers of each of the aircraft associated with each of the plurality of wake energy formation flight plans received from a formation flight coordination ground station 206. The aircraft having the aircraft identifier VT-PHX has been selected as the leading aircraft. In various embodiments, the rendezvous flight pairing display 600 includes a "select aircraft" drop-down menu that includes the aircraft identifiers of each of the aircraft associated with each of a plurality of short rendezvous flight plans received from a formation flight coordination ground station 206.

In various embodiments, the crew member of the following aircraft 202 is provided with the option of defining a formation flight based on a start location and an end location. The rendezvous flight pairing display 600 includes a start location selector "FROM" and an end location selector "TO". A crew member of the following aircraft 202 is provided with the option selecting a start location and end location for flying in formation with the leading aircraft 200. The start location selector "TO" is a drop-down menu that includes selectable waypoints disposed along the formation flight path associated with the selected leading aircraft 202. The end location selector "FROM" is a drop-down menu that includes selectable waypoints disposed along the formation flight path associated with the leading aircraft 202. The waypoint ANZEL has been selected as the start location and the waypoint DDUKE has been selected as the end location. The paired aircraft communication management system 302 of the following aircraft 202 is configured to initiate the paired communication channel at the start location and terminate the paired communication channel upon reaching the end location.

In various embodiments, the paired aircraft communication management system 302 of the following aircraft 202 provides a crew member of the following aircraft 202 with the option defining a formation flight based on a start location and a formation flight distance from the start location. The rendezvous flight pairing display 600 includes a formation flight distance field. A crew member can specify the start location using the start location selector and specify the formation flight distance in the "Distance" field via an onboard input device. The paired aircraft communication management system 302 of the following aircraft 202 is configured to transmit a pairing request including the start location and the formation flight distance to the leading aircraft 200. The paired aircraft communication management system 302 of the following aircraft 202 is configured to initiate the paired communication channel at the start location and terminate the paired communication channel upon reaching the formation flight distance from the start location.

In various embodiments, the paired aircraft communication management system 302 of the following aircraft 202 provides a crew member of the following aircraft 202 with the option defining a formation flight based on a start location and a formation flight duration time from the start location. The rendezvous flight pairing display 600 includes a formation flight duration time field. A crew member can specify the start location using the start location selector and specify the formation flight duration time in the "Duration" field via an onboard input interface. The paired aircraft communication management system 302 of the following aircraft 202 is configured to transmit a pairing request including the start location and the formation flight duration time to the leading aircraft 200. The paired aircraft communication management system 302 of the following aircraft 202 is configured to initiate the paired communication channel at the start location and terminate the paired communication channel after the formation flight duration time has elapsed.

In various embodiments, the paired aircraft communication management system 302 of the following aircraft 202 provides a crew member of the following aircraft 202 with the option defining a formation flight altitude. The formation flight altitude is the flight altitude that the following aircraft 202 will fly at when flying in formation with the leading aircraft 200. The rendezvous flight pairing display 600 includes a formation flight altitude field. A crew member can specify the formation flight altitude in the "Altitude" field via an onboard input interface. The paired aircraft communication management system 302 of the following aircraft 202 is configured to transmit a pairing request including the formation flight altitude to the leading aircraft 200.

In various embodiments, the paired aircraft communication management system 302 of the following aircraft 202 provides a crew member of the following aircraft 202 with the option defining a formation flight speed. The formation flight speed is the speed that the following aircraft 202 will fly at when flying in formation with the leading aircraft 200. The rendezvous flight pairing display 600 includes a formation flight speed field. A crew member can specify the formation flight speed in the "Speed" field via an onboard input interface. The paired aircraft communication management system 302 of the following aircraft 202 is configured to transmit a pairing request including the formation flight speed to the leading aircraft 200.

In various embodiments, the paired aircraft communication management system 302 of the following aircraft 202 provides a crew member of the following aircraft 202 with the option specifying a flight phase that the following aircraft 202 will be flying in formation with the leading aircraft 200. Examples of flight phases include a climb flight phase, a cruise flight phase, and a descent flight phase. The rendezvous flight pairing display 600 includes a flight phase field. A crew member can specify the flight phase in the "flight phase" field via an onboard input interface. The paired aircraft communication management system 302 of the following aircraft 202 is configured to transmit a pairing request including the flight phase to the leading aircraft 200.

The rendezvous flight pairing display 406 includes a SEND prompt and a CANCEL prompt. The crew member may decide to cancel the pairing request to fly in formation with the leading aircraft 200 by activating the CANCEL prompt or send a pairing request to the leading aircraft 200 by activating the SEND prompt.

In various embodiments, the controller 304 is configured to display a synchronized visualization of the following aircraft 202 and the leading aircraft 200 flying in the formation along the formation flight path based on the FMS data associated with the following aircraft 202 and the FMS data of the leading aircraft 200 on the onboard display device. In various embodiments, the pairing between the FMS 21 of a leading aircraft 200 and the FMS 21 of a following aircraft 202 can initiated by and maintained between the primary FMS of the two aircraft 200, 202.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system comprising:
a first flight management system (FMS) of a first aircraft; and
a controller communicatively coupled to the first FMS, the controller being configured to:
receive, from a formation flight coordination ground station, a first wake energy formation flight plan comprising a first aircraft identifier of a second aircraft and a first formation flight path, wherein the first formation flight path is along a portion of a first flight path of the first aircraft that overlaps with a portion of a second flight path of the second aircraft and one of the first and second aircraft is a leading aircraft and the other one of the first and second aircraft is a following aircraft; and
establish a paired communication channel between the first FMS of the first aircraft and a second FMS of the second aircraft while the first and second aircraft are flying in formation along at least a portion of the first formation flight path to enable transmission of first FMS data generated by the first FMS to the second FMS and receipt of second FMS data generated by the second FMS at the first FMS.

2. The system of claim 1, further comprising an onboard input interface communicatively coupled to the controller and wherein the controller is configured to:
receive, from the formation flight coordination ground station, a plurality of wake energy formation flight plans including the first wake energy formation flight plan, wherein each of the plurality of wake energy formation flight plans is associated with one of a plurality of different aircraft including the second aircraft;
receive a selection of the first aircraft identifier of the second aircraft from a plurality of selectable aircraft identifiers via the onboard input interface, each of the plurality of selectable aircraft identifiers being associated with one of the plurality of different aircraft; and
transmit a pairing request from the first aircraft to the second aircraft to request establishing the paired communication channel based on the selection of the first aircraft identifier of the second aircraft.

3. The system of claim 1, further comprising an onboard input interface communicatively coupled to the controller, wherein the controller is configured to:
receive a start location along the first formation flight path via the onboard input interface;
receive an end location along the first formation flight path via the onboard input interface; and
transmit a pairing request from the first aircraft to the second aircraft to initiate the paired communication channel at the start location and terminate the paired communication channel at the end location.

4. The system of claim 1, further comprising an onboard input interface communicatively coupled to the controller, wherein the controller is configured to:
receive a formation flight duration time via the onboard input interface; and
transmit a pairing request from the first aircraft to the second aircraft to initiate the paired communication channel at a start location of the at least the portion of the first formation flight path and terminate the paired communication channel after the formation flight duration time has elapsed.

5. The system of claim 1, further comprising an onboard input interface communicatively coupled to the controller, wherein the controller is configured to:
receive a formation flight distance via the onboard input interface; and
transmit a pairing request from the first aircraft to the second aircraft to initiate the paired communication channel at a start location of the at least the portion of the first formation flight path and terminate the paired communication channel upon reaching the formation flight distance from the start location.

6. The system of claim 1, further comprising an onboard input interface communicatively coupled to the controller, wherein the controller is configured to:
receive a formation flight altitude via the onboard input interface; and
transmit a request to the second aircraft to fly in the formation along the at least the portion of the first formation flight path at the formation flight altitude.

7. The system of claim 1, further comprising an onboard input interface communicatively coupled to the controller, wherein the controller is configured to:
receive a formation flight speed via the onboard input interface; and
transmit a request to the second aircraft to fly in the formation along the at least the portion of the first formation flight path at the formation flight speed.

8. The system of claim 1 further comprising an onboard input interface communicatively coupled to the controller, wherein the controller is configured to:
receive a selection of a flight phase from one of a climb flight phase, a cruise flight phase, and a descent flight phase via the onboard input interface; and
transmit a request to the second aircraft to fly in the formation along the at least the portion of the first formation flight path in accordance with the selected flight phase.

9. A method comprising:
receiving from a formation flight coordination ground station at a first aircraft, a first wake energy formation flight plan comprising a first aircraft identifier of a second aircraft and a first formation flight path, wherein the first formation flight path is along a portion of a first flight path of the first aircraft that overlaps with a portion of a second flight path of the second aircraft and one of the first and second aircraft is a leading aircraft and the other one of the first and second aircraft is a following aircraft; and
establishing, by the first aircraft, a paired communication channel between a first flight management system (FMS) of the first aircraft and a second FMS of the second aircraft while the first and second aircraft are flying in formation along at least a portion of the first formation flight path to enable transmission of first FMS data generated by the first FMS to the second FMS and receipt of second FMS data generated by the second FMS at the first FMS.

10. The method of claim 9, further comprising:
receiving, from the formation flight coordination ground station at the first aircraft, a plurality of wake energy formation flight plans including the first wake energy formation flight plan, wherein each of the plurality of wake energy formation flight plans is associated with one of a plurality of different aircraft including the second aircraft;
receiving a selection of the first aircraft identifier of the second aircraft from a plurality of selectable aircraft identifiers via an onboard input interface of the aircraft, each of the plurality of selectable aircraft identifiers being associated with one of the plurality of different aircraft; and
transmitting a pairing request from the first aircraft to the second aircraft to request establishing the paired communication channel based on the selection of the first aircraft identifier of the second aircraft.

11. The method of claim 9, further comprising:
receiving a start location along the first formation flight path via an onboard input interface of the first aircraft;
receiving an end location along the first formation flight path via the onboard input interface of the first aircraft; and
transmitting a pairing request from the first aircraft to the second aircraft to initiate the paired communication channel at the start location and terminate the paired communication channel at the end location.

12. The method of claim 9, further comprising:
receiving a formation flight duration time via an onboard input interface of the first aircraft; and
transmitting a pairing request from the first aircraft to the second aircraft to initiate the paired communication channel at a start location of the at least the portion of the first formation flight path and terminate the paired communication channel after the formation flight duration time has elapsed.

13. The method of claim 9, further comprising:
receiving a formation flight distance via the onboard input interface; and
transmitting a pairing request from the first aircraft to the second aircraft to initiate the paired communication channel at a start location of the at least the portion of the first formation flight path and terminate the paired communication channel upon reaching the formation flight distance from the start location.

14. The method of claim 9, wherein the first aircraft is the following aircraft and the second aircraft is the leading aircraft.

15. The method of claim 9, wherein:
the first FMS data comprises at least one of a latitude location of the first aircraft, a longitude location of the first aircraft, an altitude of the first aircraft, a ground speed of the first aircraft, a true track angle of the first aircraft, a true heading of the first aircraft, a Mach number associated with a speed of the first aircraft, a true airspeed (TAS) of the first aircraft, a roll angle of the first aircraft, a hybrid vertical speed of the first aircraft, a gross weight of the first aircraft, a wind direction detected by the first aircraft, and a wind speed detected by the first aircraft; and
the second FMS data comprises at least one of a latitude location of the second aircraft, a longitude location of the second aircraft, an altitude of the second aircraft, a ground speed of the second aircraft, a true track angle of the second aircraft, a true heading of the second aircraft, a Mach number associated with a speed of the second aircraft, a true airspeed (TAS) of the second aircraft, a roll angle of the second aircraft, a hybrid vertical speed of the second aircraft, a gross weight of the second aircraft, a wind direction detected by the second aircraft, and a wind speed detected by the second aircraft.
